(19) **Europäisches Patentamt / European Patent Office / Office européen des brevets**

(11) **EP 3 376 722 B1**

(12) # EUROPEAN PATENT SPECIFICATION

(45) Date of publication and mention of the grant of the patent:
**17.06.2020 Bulletin 2020/25**

(21) Application number: **16795687.9**

(22) Date of filing: **23.02.2016**

(51) Int Cl.:
**H04L 25/02** *(2006.01)* **H04L 27/26** *(2006.01)*

(86) International application number:
**PCT/CN2016/074350**

(87) International publication number:
**WO 2016/184200 (24.11.2016 Gazette 2016/47)**

(54) **METHOD AND DEVICE FOR ACQUIRING CHANNEL RESPONSE**

VERFAHREN UND SYSTEM ZUR ERFASSUNG EINER KANALANTWORT

PROCÉDÉ ET DISPOSITIF D'ACQUISITION DE RÉPONSE DE CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2015 CN 201510779669**

(43) Date of publication of application:
**19.09.2018 Bulletin 2018/38**

(73) Proprietor: **ZTE Corporation**
**Shenzhen, Guangdong 518057 (CN)**

(72) Inventor: **WU, Hao**
**Shenzhen**
**Guangdong 518057 (CN)**

(74) Representative: **Baudler, Ron et al**
**Canzler & Bergmeier**
**Patentanwälte Partnerschaft mbB**
**Friedrich-Ebert-Straße 84**
**85055 Ingolstadt (DE)**

(56) References cited:
**EP-A1- 2 667 555**      **WO-A1-2015/154800**
**CN-A- 101 601 193**      **CN-A- 102 238 112**
**US-A1- 2009 060 102**      **US-A1- 2015 172 088**

• **TRUONG KIEN T ET AL: "Effects of channel aging in massive MIMO systems", JOURNAL OF COMMUNICATIONS AND NETWORKS, NEW YORK, NY, USA,IEEE, US, vol. 15, no. 4, 1 August 2013 (2013-08-01) , pages 338-351, XP011527838, ISSN: 1229-2370, DOI: 10.1109/JCN.2013.000065 [retrieved on 2013-09-24]**

## Description

### TECHNICAL FIELD

The present disclosure relates to, but is not limited to the field of wireless communications, and in particular, to a method and device for acquiring a channel response.

### BACKGROUND

Among the numerous wireless communication technologies, Orthogonal Frequency Division Multiplexing (OFDM) is one of the most promising technologies. In recent years, due to the rapid development of digital signal processing technology, OFDM has attracted a wide attention as a high-speed transmission technology with high spectrum utilization and good anti-multipath performance. OFDM technology has been successfully applied to DAB (Digital Audio Broadcasting), DVB (Digital Video Broadcasting), HDTV (High Definition Television), WLAN (Wireless Local Area Network), and WMAN (Wireless Metropolitan Area Network).

Beamforming is applied to the OFDM system to improve system performance. Using this technique requires knowledge of channel information. An MS (Mobile Station) may send a Sounding signal to a BS (Base Station) so that the BS can know a channel response from the BS to the MS. Channel estimation of the Sounding signal mainly includes LS (Least Squares) channel estimation algorithm and MMSE (Minimum Mean Square Error) channel estimation algorithm. With these methods, only the channel response of the historical subframe may be estimated. In the related art, a cross-correlation matrix of the entire bandwidth is used to obtain the channel response of the updated subframe. Since the cross-correlation matrices of individual carriers in the entire bandwidth are different, the channel response estimation performance of the updated subframe may be deteriorated.

Therefore, a problem to be urgently solved is to provide a new determination of obtaining the channel response information for the updating subframe.

Patent document WO2015/154800 relates to a mobile station and a method in a mobile station. In particular, a mechanism is herein described, for predicting a channel state information metric of a downlink channel of a radio network node in a wireless communication network.

Patent document US2015/172088 relates to OFDM (orthogonal frequency division multiplexing) systems, and, more particularly, to adaptive channel prediction and/or mitigating interference in OFDM systems.

However, the above-mentioned issues remain unsolved.

### SUMMARY

The invention is defined in the independent claims.

Advantageous embodiments are set out in the dependent claims. According to the present invention, there are provided a method for acquiring a channel response, a device for acquiring a channel response, a computer storage medium and a computer program, according to the annexed claims.

The following is a summary of the subject matters detailed in the present disclosure. This summary is not intended to limit the protection scope of the claims.

The method and device for acquiring a channel response provided by the embodiments of the present disclosure provide a manner for acquiring channel response information of an updated subframe.

Embodiments of the present disclosure provide the following technical solutions:

a method for acquiring a channel response, including:

obtaining a channel estimation of each carrier of a $(n-m)^{th}$ frame to a $(n-1)^{th}$ frame by a Sounding Reference Signal (SRS);
obtaining a cross-correlation matrix of each carrier of the $(n-m)^{th}$ frame to the $(n-1)^{th}$ frame by performing a conjugate multiplication on the channel estimations, and estimating a cross-correlation matrix of each carrier of a subframe $p$ of a $n^{th}$ frame and the $(n-m)^{th}$ frame to the $(n-1)^{th}$ frame;
filtering each element $\hat{R}_{pq}$ of the cross-correlation matrix of each carrier; and
acquiring a channel response H(n) of each carrier of the subframe $p$ of the $n^{th}$ frame via a linear prediction algorithm by using the cross-correlation matrices,
wherein n, m and p are all positive integers.

The obtaining the cross-correlation matrix of each carrier of the $(n-m)^{th}$ frame to the $(n-1)^{th}$ frame by performing the conjugate multiplication on the channel estimates, and estimating the cross correlation of each carrier of the subframe $p$ of the $n^{th}$ frame and the $(n-m)^{th}$ frame to the $(n-1)^{th}$ frame, includes:

an expression of the cross-correlation matrix of one carrier of the (n-m)$^{th}$ frame to the (n-1)$^{th}$ frame is as follows:

$$\mathbf{R}_1 = \begin{bmatrix} \hat{R}_{1,1} & \hat{R}_{2,1} & \ldots & \hat{R}_{m-1,1} & \hat{R}_{m,1} \\ \hat{R}_{1,2} & \hat{R}_{2,2} & \ldots & \hat{R}_{m-1,2} & \hat{R}_{m,2} \\ \ldots & \ldots & \ldots & \ldots & \ldots \\ \hat{R}_{1,m-1} & \hat{R}_{2,m-2} & \ldots & \hat{R}_{m-1,m-1} & \hat{R}_{m,m-1} \\ \hat{R}_{1,m} & \hat{R}_{2,m-1} & \ldots & \hat{R}_{m-1,m} & \hat{R}_{m,m} \end{bmatrix}$$

, and the cross-correlation matrix of each carrier of the subframe $p$ of the n$^{th}$ frame and the (n-m)$^{th}$ frame to the (n-1)$^{th}$ frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ \ldots \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

wherein, $\hat{R}_{pq}$ represents a correlation coefficient of one carrier of a (n-p)$^{th}$ frame and a (n-q)$^{th}$ frame, which is obtained by performing a conjugate multiplication on the channel estimation of one carrier of the (n-p)$^{th}$ frame and the channel estimation of one carrier of the (n-q)$^{th}$ frame.

The filtering each element $\hat{R}_{pq}$ of the cross-correlation matrix of each carrier includes: a correlation coefficient obtained by a current estimation is $\hat{R}_{pq}^{"}$, and a correlation coefficient obtained by a historical estimation is $\hat{R}_{pq}^{'}$, then the correlation coefficient $\hat{R}_{pq}$ is:

$$\hat{R}_{pq} = (a\hat{R}_{pq}^{"} + (1-a)\hat{R}_{pq}^{'})$$

wherein, $a$ is a filter coefficient.

The channel response of each carrier of the subframe $p$ of the n$^{th}$ frame is

$$H(n) = \sum_{i=1}^{m} a_i H(n-i);$$

wherein, $a_i$ is obtained by a following equation:

$$\mathbf{R}_2 = \mathbf{R}_1 \begin{bmatrix} a_1 \\ a_2 \\ \ldots \\ a_{m-1} \\ a_m \end{bmatrix}$$

wherein, $i$ is a positive integer.

There is also provided a device for acquiring a channel response, including:

a first acquisition module configured to obtain a channel estimation of each carrier of a (n-m)th frame to a (n-1)th frame by a Sounding Reference Signal (SRS);

a second acquisition module configured to obtain a cross-correlation matrix of each carrier of the (n-m)th frame to the (n-1)th frame by performing a conjugate multiplication on the channel estimates, and estimate a cross-correlation matrix of each carrier of a subframe $p$ of a nth frame and the (n-m)th frame to the (n-1)th frame;

a filtering module configured to filter each element $\hat{R}_{pq}$ of the cross-correlation matrix of each carrier; and

a third acquisition module configured to acquire a channel response H(n) of each carrier of the subframe $p$ of the nth frame via a linear prediction algorithm by using the cross-correlation matrices,

wherein, *n, m and p* are all positive integers.

The second acquisition module being configured to obtain the cross-correlation matrix of each carrier of the (n-m)th frame to the (n-1)th frame by performing the conjugate multiplication on the channel estimates, and estimate the cross-correlation matrix of each carrier of the subframe *p* of the nth frame and the (n-m)th frame to the (n-1)th frame, includes:

an expression of the cross-correlation matrix of one carrier of the (n-m)th frame to the (n-1)th frame is as follows:

$$\mathbf{R}_1 = \begin{bmatrix} \hat{R}_{1,1} & \hat{R}_{2,1} & ... & \hat{R}_{m-1,1} & \hat{R}_{m,1} \\ \hat{R}_{1,2} & \hat{R}_{2,2} & ... & \hat{R}_{m-1,2} & \hat{R}_{m,2} \\ ... & ... & ... & ... & ... \\ \hat{R}_{1,m-1} & \hat{R}_{2,m-2} & ... & \hat{R}_{m-1,m-1} & \hat{R}_{m,m-1} \\ \hat{R}_{1,m} & \hat{R}_{2,m-1} & ... & \hat{R}_{m-1,m} & \hat{R}_{m,m} \end{bmatrix}$$

, and

the cross-correlation matrix of one carrier of the subframe *p* of the nth frame and the (n-m)th frame to the (n-1)th frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ ... \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix}$$

wherein, $\hat{R}_{pq}$ represents a correlation coefficient of one carrier of a pth frame and a qth frame, which is obtained by performing a conjugate multiplication on the channel estimation of one carrier of the pth frame and the channel estimation of one carrier of the qth frame.

The filtering module being configured to filter each element $\hat{R}_{pq}$ of the cross-correlation matrix of each carrier, includes:

a correlation coefficient obtained by a current estimation is $\hat{R}''_{pq}$, and a correlation coefficient obtained by a historical estimation is $\hat{R}'_{pq}$, then the correlation coefficient $\hat{R}_{pq}$ is:

$$\hat{R}_{pq} = (a\hat{R}''_{pq} + (1-a)\hat{R}'_{pq})$$

wherein, *a* is a filter coefficient.

The channel response of each carrier of the subframe $p$ of the $n^{th}$ frame is

$$H(n) = \sum_{i=1}^{m} a_i H(n-i);$$

wherein, $a_i$ is obtained by a following equation:

$$\mathbf{R}_2 = \mathbf{R}_1 \begin{bmatrix} a_1 \\ a_2 \\ ... \\ a_{m-1} \\ a_m \end{bmatrix};$$

wherein, $i$ is a positive integer.

According to the embodiments provided by the present disclosure, after obtaining the channel response of each carrier of the $(n-m)^{th}$ frame to the $(n-1)^{th}$ frame, a cross-correlation matrix of each carrier of the $(n-m)^{th}$ frame to the $(n-1)^{th}$ frame is obtained by performing a conjugate multiplication on the channel estimations, and a cross-correlation matrix of each carrier of a subframe $p$ of a $n^{th}$ frame and the $(n-m)^{th}$ frame to the $(n-1)^{th}$ frame is estimated. After filtering each element $\hat{R}_{pq}$ of the cross-correlation matrix of each carrier, a channel response H(n) of each carrier of the subframe p of the $n^{th}$ frame is acquired via a linear prediction algorithm by using the cross-correlation matrices. In this way, a new manner for acquiring the channel response information of the updated subframe of each carrier is provided, and it is possible to more accurately acquire the channel response H(n) of each carrier by using the cross-correlation matrices.

Other aspects may be understood after reading and understanding the drawings and detailed description.

## BRIEF DESCRIPTION OF THE DRAWINGS

Fig. 1 is a flowchart of a method for acquiring a channel response provided in a first embodiment of the present disclosure;
Fig. 2 is a comparison diagram of effects in a second embodiment of the present disclosure; and
Fig. 3 is a schematic structural diagram of a device for acquiring a channel response provided in a third embodiment of the present disclosure.

## DETAILED DESCRIPTION

The technical solutions of the embodiments of the present disclosure will be further described in detail below with reference to the accompanying drawings and specific embodiments. It should be noted that in the case of no conflict, the embodiments and the features in the embodiments in the present disclosure may be combined with each other arbitrarily.

First Embodiment

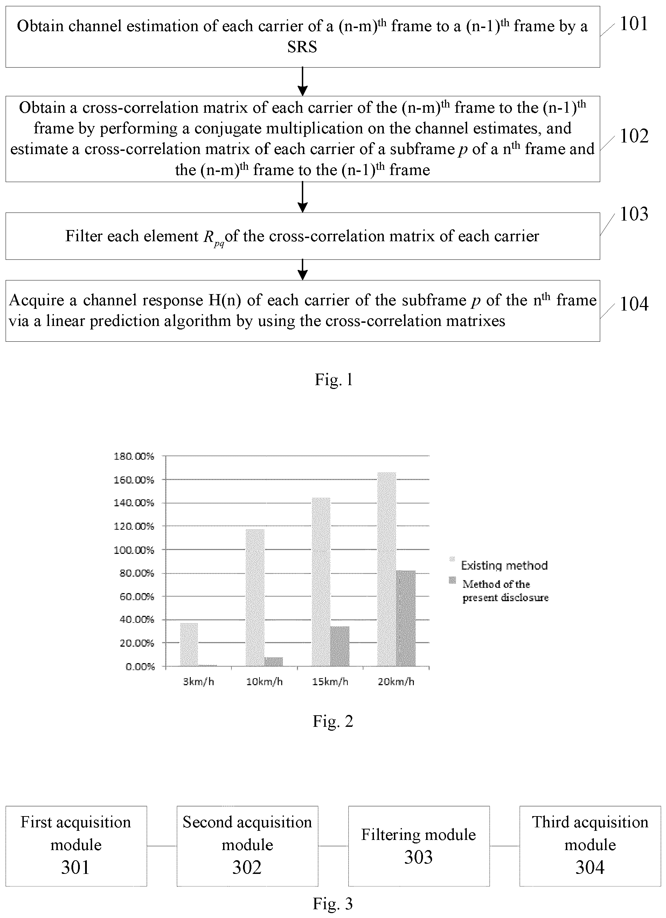

Fig. 1 is a flowchart of a method for acquiring a channel response provided herein. The method shown in Fig. 1 includes the following steps.

In step 101, a channel estimation of each carrier of a $(n-m)^{th}$ frame to a $(n-1)^{th}$ frame is obtained by a Sounding Reference Signal (SRS).

In step 102, a cross-correlation matrix of each carrier of the $(n-m)^{th}$ frame to the $(n-1)^{th}$ frame is obtained by performing a conjugate multiplication on the channel estimates, and a cross-correlation matrix of each carrier of a subframe $p$ of a $n^{th}$ frame and the $(n-m)^{th}$ frame to the $(n-1)^{th}$ frame is estimated.

In step 103, each element $\hat{R}_{pq}$ of the above-mentioned cross-correlation matrix of each carrier is filtered, wherein, $p, q$ are matrix element indexes, for example, a dimension of $R$ is 8*8, then a value of $p$ is 1, 2, 3, 4, 5, 6, 7, 8; and a value of $q$ is 1, 2, 3, 4, 5, 6, 7, 8.

In step 104, a channel response H(n) of each carrier of the subframe $p$ of the $n^{th}$ frame is acquired via a linear prediction algorithm by using the cross-correlation matrices, wherein *n, m, p* and *q* are all positive integers. It should be noted that in the embodiments of the present disclosure, *n* is generally greater than *m*, and *n* is a positive integer greater than 1.

The method embodiments provided by the present disclosure provides a new way for acquiring channel response information of an updated subframe, and H(n) may be obtained more accurately by using the correlation coefficient.

Second Embodiment

The following further describes the technical solution of the embodiments of the present disclosure with reference to specific examples.

First Example

This example predicts a channel response of each carrier of the nth frame according to the channel responses of the (n-2)th frame to the (n-1)th frame, and a first implementation manner is as follows.

In step 1, a channel estimation of each carrier of a (n-2)th frame to a (n-1)th frame is obtained through a SRS.

In step 2, a cross-correlation matrix of each carrier of the (n-2)th frame to the (n-1)th frame is obtained by performing a conjugate multiplication on the channel estimations, and a cross-correlation matrix of each carrier of a subframe *p* of a nth frame and the (n-2)th frame to the (n-1)th frame is estimated.

An expression of the cross-correlation matrix of one carrier of the (n-2)th frame to the (n-1)th frame is as follows:

$$\mathbf{R}_1 = \begin{bmatrix} \hat{R}_{1,1} & \hat{R}_{2,1} \\ \hat{R}_{1,2} & \hat{R}_{2,2} \end{bmatrix}.$$

The cross-correlation matrix of one carrier of the subframe *p* of the nth frame and the (n-2)th frame to the (n-1)th frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \end{bmatrix}.$$

Herein, $\hat{R}_{pq}$ represents a correlation coefficient of one carrier of a (n-p)th frame and a (n-q)th frame, which is obtained by performing a conjugate multiplication on the channel estimation of one carrier of the (n-p)th frame and the channel estimation of one carrier of the (n-q)th frame.

In step 3, each element $\hat{R}_{pq}$ of the cross-correlation matrix of the above each carrier is filtered. Assuming that a correlation coefficient obtained by a current estimation is $\hat{R}''_{pq}$, and a correlation coefficient obtained by a historical estimation is $\hat{R}'_{pq}$, then the correlation coefficient $\hat{R}_{pq}$ is:

$$\hat{R}_{pq} = (a\hat{R}''_{pq} + (1-a)\hat{R}'_{pq})$$

wherein, a filter coefficient *a* is adjusted according to actual conditions.

In step 4, the channel response of each carrier of the subframe *p* of the nth frame is obtained by a linear prediction method. The channel response of each carrier of the subframe p of the nth frame may be obtained by linearly transforming the channel response H(n-2) of the (n-2)th frame to the channel response H(n-1) of the (n-1)th frame as follows:

$$H(n) = \sum_{i=1}^{2} a_i H(n-i)$$

wherein, $a_i$ is obtained by the following equation:

$$\mathbf{R}_2 = \mathbf{R}_1 \begin{bmatrix} a_1 \\ a_2 \end{bmatrix}.$$

Second Example

This example predicts the channel response of the $n^{th}$ frame according to the channel responses of the $(n-4)^{th}$ frame to the $(n-1)^{th}$ frame, and a second specific implementation manner is as follows.

In step 1', a channel estimation of each carrier of a $(n-4)^{th}$ frame to a $(n-1)^{th}$ frame is obtained by a SRS.

In step 2', a cross-correlation matrix of each carrier of the $(n-4)^{th}$ frame to the $(n-1)^{th}$ frame is obtained by performing a conjugate multiplication on the channel estimations, and a cross-correlation matrix of each carrier of a subframe $p$ of a $n^{th}$ frame and the $(n-4)^{th}$ frame to $(n-1)^{th}$ frame is estimated.

An expression of the cross-correlation matrix of one carrier of the $(n-4)^{th}$ frame to the $(n-1)^{th}$ frame is as follows:

$$\mathbf{R}_1 = \begin{bmatrix} \hat{R}_{1,1} & \hat{R}_{2,1} & \hat{R}_{3,1} & \hat{R}_{4,1} \\ \hat{R}_{1,2} & \hat{R}_{2,2} & \hat{R}_{3,2} & \hat{R}_{4,2} \\ \hat{R}_{1,3} & \hat{R}_{2,3} & \hat{R}_{3,3} & \hat{R}_{4,3} \\ \hat{R}_{1,4} & \hat{R}_{2,4} & \hat{R}_{3,4} & \hat{R}_{4,4} \end{bmatrix}.$$

The cross-correlation matrix of one carrier of the subframe $p$ of the $n^{th}$ frame and the $(n-4)^{th}$ frame to the $(n-1)^{th}$ frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ (10-p)\hat{R}_{1,3}/10 + p\hat{R}_{1,4}/10 \\ (10-p)\hat{R}_{1,4}/10 + p\hat{R}_{1,5}/10 \end{bmatrix}$$

wherein, $\hat{R}_{pq}$ represents a correlation coefficient of one carrier of a $(n-p)^{th}$ frame and a $(n-q)^{th}$ frame, which is obtained by performing a conjugate multiplication on the channel estimation of one carrier of the $(n-p)^{th}$ frame and the channel estimation of one carrier of the $(n-q)^{th}$ frame.

In step 3', each element $\hat{R}_{pq}$ of the cross-correlation matrix of each carrier is filtered. Assuming that a correlation coefficient obtained by a current estimation is $\hat{R}_{pq}''$, and a correlation coefficient obtained by a historical estimation is $\hat{R}_{pq}'$, then the correlation coefficient $\hat{R}_{pq}$ is:

$$\hat{R}_{pq} = (a\hat{R}_{pq}'' + (1-a)\hat{R}_{pq}')$$

wherein, a filter coefficient $a$ is adjusted according to actual conditions.

In step 4', a channel response of each carrier of the subframe $p$ of the $n^{th}$ frame is obtained by a linear prediction method. The channel response of each carrier of the subframe $p$ of the $n^{th}$ frame may be obtained by linearly transforming from the channel response H(n-2) of the $(n-4)^{th}$ frame to the channel response H(n-1) of the $(n-1)^{th}$ frame as follows:

$$H(n) = \sum_{i=1}^{4} a_i H(n-i)$$

wherein, $a_i$ is obtained by the following equation:

$$\mathbf{R}_2 = \mathbf{R}_1 \begin{bmatrix} a_1 \\ a_2 \\ a_3 \\ a_4 \end{bmatrix}.$$

Third Example

This example predicts the channel response of the 10th frame according to the channel responses of the 8th to 9th frames, and a third specific implementation manner is as follows.

In step $a$, a channel estimation of each carrier of the 8th frame to the 9th frame is obtained through a SRS.

In step $b$, a cross-correlation matrix of each carrier of the 8th frame to the 9th frame is obtained by performing a conjugate multiplication on the channel estimations, and a cross-correlation matrix of each carrier of subframe $p$ the 8th frame and the 8th frame to the 9th frame is estimated.

An expression of the cross-correlation matrix of one carrier of the 8th frame to the 9th frame is as follows:

$$\mathbf{R}_1 = \begin{bmatrix} 1 & 0.9773 \\ 0.9773 & 1 \end{bmatrix}.$$

The cross-correlation matrix of one carrier of a subframe $p$ of the 10th frame and the 8th frame to 9th frame is as follows:

$$\mathbf{R}_2 = \begin{bmatrix} 0.9873 \\ 0.9107 \end{bmatrix}.$$

wherein, $\hat{R}_{pq}$ represents a correlation coefficient of one carrier of a $(n-p)$th frame and a $(n-q)$th frame, which is obtained by performing a conjugate multiplication on the channel estimation of one carrier of the $(n-p)$th frame and the channel estimation of one carrier of the $(n-q)$th frame.

In step $c$, each element $\hat{R}_{pq}$ of the cross-correlation matrix of each carrier is filtered. Assuming that a correlation coefficient obtained by a current estimation is $\hat{R}''_{pq}$, and a correlation coefficient obtained by a historical estimation is $\hat{R}'_{pq}$, then the correlation coefficient $\hat{R}_{pq}$ is:

$$\hat{R}_{pq} = (a\hat{R}''_{pq} + (1-a)\hat{R}'_{pq})$$

wherein, a filter coefficient $a$ is adjusted according to actual conditions.

In step $d$, a channel response of each carrier of the 10th frame is obtained by a linear prediction method. The channel response of each carrier of the sub-frame $p$ of the 10th frame may be obtained by linearly transforming from a channel response H(8) of the 8th frame to a channel response H(9) of the 9th frame as follows:

$$H(10) = \sum_{i=1}^{2} a_i H(10-i)$$

wherein, $a_i$ is obtained by the following equation:

$$\begin{bmatrix} 0.9873 \\ 0.9107 \end{bmatrix} = \begin{bmatrix} 1 & 0.9773 \\ 0.9773 & 1 \end{bmatrix} \begin{bmatrix} a_1 \\ a_2 \end{bmatrix}.$$

Fourth Example

This example predicts the channel response of the 12th frame according to the channel responses of the 8th frame to the 11th frame, and a fourth specific implementation manner is as follows.

In step a', a channel estimate of the 8th frame to the 11th frame is obtained through a SRS.

In step b', a cross-correlation matrix of each carrier of the 8th to 11th frames is obtained by performing a conjugate multiplication on the channel estimations, and a cross-correlation matrix of each carrier of a subframe $p$ of a 12th frame and the 8th frame to 11th frame is estimated.

An expression of the cross-correlation matrix of one carrier between the 8th and 11th frames is as follows:

$$\mathbf{R}_1 = \begin{bmatrix} 1 & 0.9769 & 0.9093 & 0.8017 \\ 0.9769 & 1 & 0.9769 & 0.9093 \\ 0.9093 & 0.9769 & 1 & 0.9769 \\ 0.8017 & 0.9093 & 0.9769 & 1 \end{bmatrix}.$$

The cross-correlation matrix of one carrier of the subframe $p$ of the 12th frame and the 8th to 11th frames is as follows:

$$\mathbf{R}_2 = \begin{bmatrix} 0.9769 \\ 0.9093 \\ 0.8017 \\ 0.6617 \end{bmatrix}.$$

wherein, $\hat{R}_{pq}$ represents a correlation coefficient of one carrier of a $(n-p)^{th}$ frame and a $(n-q)^{th}$ frame, which is obtained by performing a conjugate multiplication on the channel estimation of one carrier of the $(n-p)^{th}$ frame and the channel estimation of one carrier of the $(n-q)^{th}$ frame.

In step c', each element $\hat{R}_{pq}$ of the cross-correlation matrix of each carrier is filtered. Assuming that a correlation coefficient obtained by a current estimation is $\hat{R}^{''}_{pq}$, and a correlation coefficient obtained by a historical estimation is $\hat{R}^{'}_{pq}$, then the correlation coefficient $\hat{R}_{pq}$ is:

$$\hat{R}_{pq} = (a\hat{R}^{''}_{pq} + (1-a)\hat{R}^{'}_{pq})$$

wherein, a filter coefficient $a$ is adjusted according to actual conditions.

In step d', a channel response of each carrier of the 12th frame is obtained by a linear prediction method. The channel response of each carrier of the sub-frame $p$ of the 12th may be obtained by linearly transforming from a channel response H(8) of the 8th frame to a channel response H(11) of the 11th frame as follows:

$$H(12) = \sum_{i=1}^{4} a_i H(12-i)$$

wherein, $a_i$ is obtained by the following equation:

$$\mathbf{R}_2 = \mathbf{R}_1 \begin{bmatrix} a_1 \\ a_2 \\ a_3 \\ a_4 \end{bmatrix}.$$

The effects of the existing method and the method of the embodiments of the present disclosure are compared according to the following formula:

$$100\% * \text{abs (Real Channel Response - Predicted Channel Response)/Real Channel Response.}$$

Herein, abs represents an absolute value.

Fig. 2 illustrates an effect comparison graph between the method of using the related art and the method for acquiring the channel response according to the embodiments of the present disclosure under 3 km/h, 10 km/h, 15 km/h, and 20 km/h. As may be seen from Fig. 2, in the low speed case (3km/h/10km/h), the technical solution in the embodiments of the present disclosure can improve the performance by about 20 times, and in the middle speed case (15km/h/20km/h), the technical solution in the embodiments of the present disclosure can improve the performance by about 2 times.

Third Embodiment

As shown in Fig. 3, a device for acquiring a channel response provided in the embodiment includes: a first acquisition module 301, a second acquisition module 302, a filtering module 303, and a third acquisition module 304.

The first acquisition module 301 is configured to obtain a channel estimation of each carrier of a $(n-m)^{th}$ frame to a $(n-1)^{th}$ frame by a SRS.

The second acquisition module 302 is configured to obtain a cross-correlation matrix of each carrier of the $(n-m)^{th}$ frame to the $(n-1)^{th}$ frame by performing a conjugate multiplication on the channel estimates, and estimate a cross-correlation matrix of each carrier of a subframe $p$ of a $n^{th}$ frame and the $(n-m)^{th}$ frame to the $(n-1)^{th}$ frame.

The filtering module 303 is configured to filter each element $\hat{R}_{pq}$ of the cross-correlation matrix of each carrier.

The third acquisition module 304 is configured to acquire a channel response H(n) of each carrier of the subframe $p$ of the $n^{th}$ frame via a linear prediction algorithm by using the cross-correlation matrices.

Herein, $n$, $m$ and $p$ are all positive integers.

The second acquiring module 302 is configured to obtain a cross-correlation matrix of each carrier of the $(n-m)^{th}$ frame to the $(n-1)^{th}$ frame by performing a conjugate multiplication on the channel estimates, and estimate a cross-correlation matrix of each carrier of a subframe $p$ of a $n^{th}$ frame and the $(n-m)^{th}$ frame to the $(n-1)^{th}$ frame, which includes: an expression of the cross-correlation matrix of one carrier of the $(n-m)^{th}$ frame to the $(n-1)^{th}$ frame is as follows:

$$\mathbf{R}_1 = \begin{bmatrix} \hat{R}_{1,1} & \hat{R}_{2,1} & \dots & \hat{R}_{m-1,1} & \hat{R}_{m,1} \\ \hat{R}_{1,2} & \hat{R}_{2,2} & \dots & \hat{R}_{m-1,2} & \hat{R}_{m,2} \\ \dots & \dots & \dots & \dots & \dots \\ \hat{R}_{1,m-1} & \hat{R}_{2,m-2} & \dots & \hat{R}_{m-1,m-1} & \hat{R}_{m,m-1} \\ \hat{R}_{1,m} & \hat{R}_{2,m-1} & \dots & \hat{R}_{m-1,m} & \hat{R}_{m,m} \end{bmatrix}.$$

The cross-correlation matrix of one carrier of the subframe $p$ of the $n^{th}$ frame and the $(n-m)^{th}$ frame to the $(n-1)^{th}$ frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ \dots \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix}.$$

Herein, $\hat{R}_{pq}$ represents a correlation coefficient of one carrier of a (n-p)<sup>th</sup> frame and a (n-q)<sup>th</sup> frame, which is obtained by performing a conjugate multiplication on the channel estimation of one carrier of the (n-p)<sup>th</sup> frame and the channel estimation conjugate of one carrier of the (n-q)<sup>th</sup> frame.

The filtering module 303 is configured to filter each element $\hat{R}$ of the above-mentioned cross-correlation matrix of each carrier, which includes:

a correlation coefficient obtained by a current estimation is $\hat{R}_{pq}''$, and a correlation coefficient obtained by a historical estimation is $\hat{R}_{pq}'$, then the correlation coefficient $\hat{R}_{pq}$ is:

$$\hat{R}_{pq} = (a\hat{R}_{pq}'' + (1-a)\hat{R}_{pq}')$$

wherein, $a$ is a filter coefficient.

The channel response of each carrier of the n<sup>th</sup> frame is $H(n) = \sum_{i=1}^{m} a_i H(n-i)$; wherein, $a_i$ is obtained by the following equation:

$$\mathbf{R}_2 = \mathbf{R}_1 \begin{bmatrix} a_1 \\ a_2 \\ \dots \\ a_{m-1} \\ a_m \end{bmatrix}$$

wherein, $i$ is a positive integer.

The device embodiments provided by the present disclosure provide a new way for acquiring channel response information for an updated subframe, and the channel response H(n) can be more accurately obtained by using the correlation coefficient. A person of ordinary skill in the art can understand that all or part of the steps in the above method may be accomplished by instructing related hardware (e.g., a processor) through a program, and the program may be stored in a computer-readable storage medium, such as a read-only memory, a magnetic disk, or a compact disk. Optionally, all or some of the steps of the above embodiments may also be implemented using one or more integrated circuits. Correspondingly, each module/unit in the above embodiments may be implemented in the form of hardware, for example, an integrated circuit is used to achieve its corresponding function, or may be implemented in the form of a software function module, for example, a program stored in a memory is executed by a processor/instruction to achieve its corresponding function. The present disclosure is not limited to any specific form of combination between hardware and software.

Industrial applicability

The above technical solution provides a new way for acquiring channel response information of an updated subframe for each carrier, and can more accurately obtain the channel response H(n) of each carrier.

**Claims**

1. A method for acquiring a channel response, comprising:

obtaining (101) a channel estimation of each carrier of a (n-m)$^{th}$ frame to a (n-1)$^{th}$ frame by a Sounding Reference Signal (SRS);

obtaining a cross-correlation matrix of each carrier of the (n-m)$^{th}$ frame to the (n-1)$^{th}$ frame by performing a conjugate multiplication on the channel estimations, and estimating a cross-correlation matrix of each carrier of a subframe $p$ of a n$^{th}$ frame and the (n-m)$^{th}$ frame to the (n-1)$^{th}$ frame (102);

filtering (103) each element $\hat{R}_{pq}$ of the cross-correlation matrix of each carrier; and

acquiring (104) a channel response H(n) of each carrier of the subframe $p$ of the n$^{th}$ frame via a linear prediction algorithm by using the cross-correlation matrices,

wherein $n$, $m$ and $p$ are all positive integers,

wherein the obtaining the cross-correlation matrix of each carrier of the (n-m)$^{th}$ frame to the (n-1)$^{th}$ frame by performing the conjugate multiplication on the channel estimates, and estimating the cross-correlation matrix of each carrier of the subframe $p$ of the n$^{th}$ frame and the (n-m)$^{th}$ frame to the (n-1)$^{th}$ frame (102), comprises:

an expression of the cross-correlation matrix of one carrier of the (n-m)$^{th}$ frame to the (n-1)$^{th}$ frame is as follows:

$$\mathbf{R}_1 = \begin{bmatrix} \hat{R}_{1,1} & \hat{R}_{2,1} & \cdots & \hat{R}_{m-1,1} & \hat{R}_{m,1} \\ \hat{R}_{1,2} & \hat{R}_{2,2} & \cdots & \hat{R}_{m-1,2} & \hat{R}_{m,2} \\ \cdots & \cdots & \cdots & \cdots & \cdots \\ \hat{R}_{1,m-1} & \hat{R}_{2,m-2} & \cdots & \hat{R}_{m-1,m-1} & \hat{R}_{m,m-1} \\ \hat{R}_{1,m} & \hat{R}_{2,m-1} & \cdots & \hat{R}_{m-1,m} & \hat{R}_{m,m} \end{bmatrix}$$

, and

the cross-correlation matrix of each carrier of the subframe $p$ of the n$^{th}$ frame and the (n-m)$^{th}$ frame to the (n-1)$^{th}$ frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ \cdots \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

wherein, $\hat{R}_{pq}$ represents a correlation coefficient of one carrier of a (n-p)$^{th}$ frame and a (n-q)$^{th}$ frame, which is obtained by performing a conjugate multiplication on the channel estimation of one carrier of the (n-p)$^{th}$ frame and the channel estimation of one carrier of the (n-q)$^{th}$ frame,

wherein the channel response of each carrier of the subframe $p$ of the n$^{th}$ frame is

$$H(n) = \sum_{i=1}^{m} a_i H(n-i);$$

wherein, $a_i$ is obtained by a following equation:

$$\mathbf{R}_2 = \mathbf{R}_1 \begin{bmatrix} a_1 \\ a_2 \\ \dots \\ a_{m-1} \\ a_m \end{bmatrix}$$

wherein, $i$ is a positive integer.

2. The method according to claim 1, wherein the filtering (103) each element $\hat{R}_{pq}$ of the cross-correlation matrix of each carrier comprises:

a correlation coefficient obtained by a current estimation is $\hat{R}_{pq}''$, and a correlation coefficient obtained by a historical estimation is $\hat{R}_{pq}'$, then the correlation coefficient $\hat{R}_{pq}$ is:

$$\hat{R}_{pq} = (a\hat{R}_{pq}'' + (1-a)\hat{R}_{pq}')$$

wherein, $a$ is a filter coefficient.

3. A device for acquiring a channel response, comprising:

a first acquisition module (301) configured to obtain a channel estimation of each carrier of a $(n-m)^{th}$ frame to a $(n-1)^{th}$ frame by a Sounding Reference Signal (SRS);
a second acquisition module (302) configured to obtain a cross-correlation matrix of each carrier of the $(n-m)^{th}$ frame to the $(n-1)^{th}$ frame by performing a conjugate multiplication on the channel estimates, and estimate a cross-correlation matrix of each carrier of a subframe $p$ of a $n^{th}$ frame and the $(n-m)^{th}$ frame to the $(n-1)^{th}$ frame;
a filtering module (303) configured to filter each element $\hat{R}_{pq}$ of the cross-correlation matrix of each carrier; and
a third acquisition module (304) configured to acquire a channel response H(n) of each carrier of the subframe $p$ of the $n^{th}$ frame via a linear prediction algorithm by using the cross-correlation matrices,
wherein, $n, m$ and $p$ are all positive integers,
wherein the second acquisition module (302) being configured to obtain the cross-correlation matrix of each carrier of the $(n-m)^{th}$ frame to the $(n-1)^{th}$ frame by performing the conjugate multiplication on the channel estimates, and estimate the cross-correlation matrix of each carrier of the subframe $p$ of the $n^{th}$ frame and the $(n-m)^{th}$ frame to the $(n-1)^{th}$ frame, comprises:

an expression of the cross-correlation matrix of one carrier of the $(n-m)^{th}$ frame to the $(n-1)^{th}$ frame is as follows:

$$\mathbf{R}_1 = \begin{bmatrix} \hat{R}_{1,1} & \hat{R}_{2,1} & \dots & \hat{R}_{m-1,1} & \hat{R}_{m,1} \\ \hat{R}_{1,2} & \hat{R}_{2,2} & \dots & \hat{R}_{m-1,2} & \hat{R}_{m,2} \\ \dots & \dots & \dots & \dots & \dots \\ \hat{R}_{1,m-1} & \hat{R}_{2,m-2} & \dots & \hat{R}_{m-1,m-1} & \hat{R}_{m,m-1} \\ \hat{R}_{1,m} & \hat{R}_{2,m-1} & \dots & \hat{R}_{m-1,m} & \hat{R}_{m,m} \end{bmatrix}$$

, and
the cross-correlation matrix of one carrier of the subframe p of the $n^{th}$ frame and the $(n-m)^{th}$ frame to the $(n-1)^{th}$ frame is as follows:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ ... \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

wherein, $\hat{R}_{pq}$ represents a correlation coefficient of one carrier of a $p^{th}$ frame and a $q^{th}$ frame, which is obtained by performing a conjugate multiplication on the channel estimation of one carrier of the $p^{th}$ frame and the channel estimation of one carrier of the $q^{th}$ frame,

wherein the channel response of each carrier of the subframe $p$ of the $n^{th}$ frame is

$$H(n) = \sum_{i=1}^{m} a_i H(n-i);$$

wherein, $a_i$ is obtained by a following equation:

$$\mathbf{R}_2 = \mathbf{R}_1 \begin{bmatrix} a_1 \\ a_2 \\ ... \\ a_{m-1} \\ a_m \end{bmatrix};$$

wherein, $i$ is a positive integer.

4. The device according to claim 3, wherein the filtering module (303) being configured to filter each element $\hat{R}_{pq}$ of the cross-correlation matrix of each carrier, comprises:

a correlation coefficient obtained by a current estimation is $\hat{R}_{pq}''$, and a correlation coefficient obtained by a historical estimation is $\hat{R}_{pq}'$, then the correlation coefficient $\hat{R}_{pq}$ is:

$$\hat{R}_{pq} = (a\hat{R}_{pq}'' + (1-a)\hat{R}_{pq}')$$

wherein, $a$ is a filter coefficient.

5. A computer storage medium having computer-executable instructions stored thereon, wherein the computer-executable instructions, when executed by a computer, cause the computer to perform the method according to any one of claims 1 to 2.

6. A computer program comprising instructions, which when executing on a processor of a device, cause the processor to perform a method according to any one of claims 1 to 2.


**Patentansprüche**

1. Ein Verfahren zum Erfassen einer Kanalantwort, umfassend:

Erhalten (101) einer Kanalschätzung jedes Trägers eines (n-m)-ten Rahmens zu einem (n-1)-ten Rahmen durch ein Sounding Reference Signal (SRS);

Erhalten einer Kreuzkorrelationsmatrix jedes Trägers des (n-m)-ten Rahmens zu dem (n-1)-ten Rahmen mittels Durchführen einer konjugierten Multiplikation der Kanalschätzungen und Schätzen einer Kreuzkorrelationsmatrix jedes Trägers eines Unterrahmens p eines n-ten Rahmens und des (n-m)-ten Rahmens zu dem (n-1)-ten Rahmen (102);

Filtern (103) jedes Elements $\hat{R}_{pq}$ der Kreuzkorrelationsmatrix jedes Trägers; und

Erfassung (104) einer Kanalantwort H(n) jedes Trägers des Unterrahmens p des n-ten Rahmens über einen linearen Prädiktionsalgorithmus unter Verwendung der Kreuzkorrelationsmatrizen,

wobei n, m und p alles positive ganze Zahlen sind,

wobei das Erhalten der Kreuzkorrelationsmatrix jedes Trägers des (n-m)-ten Rahmens zu dem (n-1)-ten Rahmen mittels Durchführen der konjugierten Multiplikation an den Kanalschätzungen und Schätzen der Kreuzkorrelationsmatrix jedes Trägers des Unterrahmens p des n-ten Rahmens und des (n-m)-ten Rahmens zu dem (n-1)-ten Rahmen (102) umfasst:

ein Ausdruck der Kreuzkorrelationsmatrix eines Trägers des (n-m)-ten Rahmens zum (n-1)-ten Rahmen wie folgt ist:

$$\mathbf{R}_1 = \begin{bmatrix} \hat{R}_{1,1} & \hat{R}_{2,1} & \dots & \hat{R}_{m-1,1} & \hat{R}_{m,1} \\ \hat{R}_{1,2} & \hat{R}_{2,2} & \dots & \hat{R}_{m-1,2} & \hat{R}_{m,2} \\ \dots & \dots & \dots & \dots & \dots \\ \hat{R}_{1,m-1} & \hat{R}_{2,m-2} & \dots & \hat{R}_{m-1,m-1} & \hat{R}_{m,m-1} \\ \hat{R}_{1,m} & \hat{R}_{2,m-1} & \dots & \hat{R}_{m-1,m} & \hat{R}_{m,m} \end{bmatrix}$$

, und

die Kreuzkorrelationsmatrix jedes Trägers des Unterrahmens p des n-ten Rahmens und des (n-m)-ten Rahmens zum (n-1)-ten Rahmen wie folgt ist:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ \dots \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

wobei, $\hat{R}_{pq}$ einen Korrelationskoeffizienten eines Trägers eines (n-p)-ten Rahmens und eines (n-q)-ten Rahmens darstellt, der mittels Durchführung einer konjugierten Multiplikation bei der Kanalschätzung eines Trägers des (n-p)-ten Rahmens und der Kanalschätzung eines Trägers des (n-q)-ten Rahmens erhalten wird,

wobei die Kanalantwort jedes Trägers des Unterrahmens p des n-ten Rahmens ist

$$H(n) = \sum_{i=1}^{m} a_i H(n-i);$$

wobei, $a_i$ mittels einer folgenden Gleichung erhalten wird:

$$\mathbf{R}_2 = \mathbf{R}_1 \begin{bmatrix} a_1 \\ a_2 \\ \dots \\ a_{m-1} \\ a_m \end{bmatrix}$$

wobei, $i$ eine positive ganze Zahl ist.

2. Verfahren nach Anspruch 1, wobei das Filtern (103) jedes Elements $\hat{R}_{pq}$ der Kreuzkorrelationsmatrix jedes Trägers umfasst:

einen Korrelationskoeffizienten, der mittels einer aktuellen Schätzung erhalten wird, $\hat{R}''_{pq}$ ist, und einen Korrelationskoeffizienten, der mittels einer früheren Schätzung erhalten wird, $\hat{R}'_{pq}$ ist, dann ist der Korrelationskoeffizient $\hat{R}_{pq}$:

$$\hat{R}_{pq} = (a\hat{R}''_{pq} + (1-a)\hat{R}'_{pq})$$

wobei, $a$ ein Filterkoeffizient ist.

3. Eine Vorrichtung zum Erfassen einer Kanalantwort, umfassend:

ein erstes Erfassungsmodul (301), das konfiguriert ist, um eine Kanalschätzung jedes Trägers eines (n-m)-ten Rahmens zu einem (n-1)-ten Rahmen durch ein Sounding Reference Signal (SRS) zu erhalten;
ein zweites Erfassungsmodul (302), das konfiguriert ist, um eine Kreuzkorrelationsmatrix jedes Trägers des (n-m)-ten Rahmens zu dem (n-1)-ten Rahmen zu erhalten, indem eine konjugierte Multiplikation der Kanalschätzungen durchgeführt wird, und um eine Kreuzkorrelationsmatrix jedes Trägers eines Unterrahmens p eines n-ten Rahmens und des (n-m)-ten Rahmens zu dem (n-1)-ten Rahmen zu schätzen;
ein Filtermodul (303), das konfiguriert ist, um jedes Element $\hat{R}_{pq}$ der Kreuzkorrelationsmatrix jedes Trägers zu filtern; und
ein drittes Erfassungsmodul (304), das konfiguriert ist, um eine Kanalantwort H(n) jedes Trägers des Unterrahmens p des n-ten Rahmens über einen linearen Vorhersagealgorithmus unter Verwendung der Kreuzkorrelationsmatrizen zu erfassen,
wobei n, m und p alles positive ganze Zahlen sind,
wobei das zweite Erfassungsmodul (302) konfiguriert ist, um die Kreuzkorrelationsmatrix jedes Trägers des (n-m)-ten Rahmens zu dem (n-1)-ten Rahmen zu erhalten, indem die konjugierte Multiplikation an den Kanalschätzungen durchgeführt wird, und die Kreuzkorrelationsmatrix jedes Trägers des Unterrahmens p des n-ten Rahmens und des (n-m)-ten Rahmens zu dem (n-1)-ten Rahmen zu schätzen, umfasst:

ein Ausdruck der Kreuzkorrelationsmatrix eines Trägers des (n-m)-ten Rahmens zum (n-1)-ten Rahmen wie folgt ist:

$$\mathbf{R}_1 = \begin{bmatrix} \hat{R}_{1,1} & \hat{R}_{2,1} & \dots & \hat{R}_{m-1,1} & \hat{R}_{m,1} \\ \hat{R}_{1,2} & \hat{R}_{2,2} & \dots & \hat{R}_{m-1,2} & \hat{R}_{m,2} \\ \dots & \dots & \dots & \dots & \dots \\ \hat{R}_{1,m-1} & \hat{R}_{2,m-2} & \dots & \hat{R}_{m-1,m-1} & \hat{R}_{m,m-1} \\ \hat{R}_{1,m} & \hat{R}_{2,m-1} & \dots & \hat{R}_{m-1,m} & \hat{R}_{m,m} \end{bmatrix}$$

, und

die Kreuzkorrelationsmatrix eines Trägers des Unterrahmens p des n-ten Rahmens und des (n-m)-ten Rahmens zum (n-1)-ten Rahmen wie folgt ist:

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ ... \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

wobei, $\hat{R}_{pq}$ einen Korrelationskoeffizienten eines Trägers eines p-ten Rahmens und eines q-ten Rahmens darstellt, der mittels Durchführen einer konjugierten Multiplikation bei der Kanalschätzung eines Trägers des p-ten Rahmens und der Kanalschätzung eines Trägers des q-ten Rahmens erhalten wird,
wobei die Kanalantwort jedes Trägers des Unterrahmens p des n-ten Rahmens ist

$$H(n) = \sum_{i=1}^{m} a_i H(n-i);$$

wobei, $a_i$ mittels einer folgenden Gleichung erhalten wird:

$$\mathbf{R}_2 = \mathbf{R}_1 \begin{bmatrix} a_1 \\ a_2 \\ ... \\ a_{m-1} \\ a_m \end{bmatrix};$$

wobei, $i$ eine positive ganze Zahl ist.

4. Vorrichtung nach Anspruch 3, bei der das Filtermodul (303) konfiguriert ist, um jedes Element $\hat{R}_{pq}$ der Kreuzkorrelationsmatrix jedes Trägers zu filtern, umfasst:

   ein Korrelationskoeffizient, der durch eine aktuelle Schätzung erhalten wird, $\hat{R}_{pq}''$ ist, und ein Korrelationskoeffizient, der durch eine frühere Schätzung erhalten wird, $\hat{R}_{pq}'$ ist, dann ist der Korrelationskoeffizient $\hat{R}_{pq}$:

   $$\hat{R}_{pq} = (a\hat{R}_{pq}'' + (1-a)\hat{R}_{pq}')$$

   wobei, $a$ ein Filterkoeffizient ist.

5. Computerspeichermedium mit darauf gespeicherten computerausführbaren Befehlen, wobei die computerausführbaren Befehle, wenn sie von einem Computer ausgeführt werden, den Computer veranlassen, das Verfahren gemäß einem der Ansprüche 1 bis 2 durchzuführen.

6. Computerprogramm mit Befehlen, die, wenn sie auf einem Prozessor einer Vorrichtung ausgeführt werden, den Prozessor veranlassen, ein Verfahren nach einem der Ansprüche 1 bis 2 auszuführen.

**Revendications**

1. Procédé d'acquisition d'une réponse de canal, comprenant :

obtenir (101) une estimation du canal de chaque support d'une (n-m)ième trame à une (n-1)ième trame par un signal de référence de sondage (SRS) ;
obtenir une matrice de corrélation croisée de chaque support de la (n-m)ième trame à la (n-1)ième trame en effectuant une multiplication conjuguée sur les estimations des canaux, et estimer une matrice de corrélation croisée de chaque support d'une sous-trame p d'une (n)ième trame et de la (n-m)ième trame à la (n-1)ième trame (102) ;
en filtrant (103) chaque élément $\hat{R}_{pq}$ de la matrice de corrélation croisée de chaque support ; et
l'acquisition (104) d'une réponse de canal H(n) de chaque support de la sous-trame p de la (n)ième trame par un algorithme de prédiction linéaire en utilisant les matrices de corrélation croisée,
dans lequel n, m et p sont tous des entiers positifs,
dans lequel l'obtention de la matrice de corrélation croisée de chaque support de la (n-m)ième trame à la (n-1)ième trame en effectuant la multiplication conjuguée sur les estimations de canaux, et l'estimation de la matrice de corrélation croisée de chaque support de la sous-trame p de la (n)ième trame et de la (n-m)ième trame à la (n-1)ième trame (102), comprend :

une expression de la matrice de corrélation croisée d'un support de la (n-m)ième trame à la (n-1)ième trame est la suivante :

$$\mathbf{R}_1 = \begin{bmatrix} \hat{R}_{1,1} & \hat{R}_{2,1} & \dots & \hat{R}_{m-1,1} & \hat{R}_{m,1} \\ \hat{R}_{1,2} & \hat{R}_{2,2} & \dots & \hat{R}_{m-1,2} & \hat{R}_{m,2} \\ \dots & \dots & \dots & \dots & \dots \\ \hat{R}_{1,m-1} & \hat{R}_{2,m-2} & \dots & \hat{R}_{m-1,m-1} & \hat{R}_{m,m-1} \\ \hat{R}_{1,m} & \hat{R}_{2,m-1} & \dots & \hat{R}_{m-1,m} & \hat{R}_{m,m} \end{bmatrix},$$

et
la matrice de corrélation croisée de chaque support de la sous-trame p de la (n)ième trame et de la (n-m)ième trame à la (n-1)ième trame est la suivante :

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ \dots \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

dans lequel, $\hat{R}_{pq}$ représente un coefficient de corrélation d'un support d'une (n-p)ième trame et d'une (n-q)ième trame, qui est obtenu en effectuant une multiplication conjuguée sur l'estimation de canal d'un support de la (n-p)ième trame et l'estimation de canal d'un support de la (n-q)ième trame,
dans lequel la réponse du canal de chaque support de la sous-trame p de la (n)ième trame est

$$H(n) = \sum_{i=1}^{m} a_i H(n-i) ;$$

dans lequel, $a_i$ est obtenu par une équation suivante :

$$\mathbf{R}_2 = \mathbf{R}_1 \begin{bmatrix} a_1 \\ a_2 \\ \dots \\ a_{m-1} \\ a_m \end{bmatrix}$$

dans lequel, *i* est un entiers positif.

2. Procédé selon la revendication 1, dans lequel le filtrage (103) de chaque élément $\hat{R}_{pq}$ de la matrice de corrélation croisée de chaque support comprend :

un coefficient de corrélation obtenu par une estimation courante est $\hat{R}_{pq}^{''}$, et un coefficient de corrélation obtenu par une estimation rétrospective est $\hat{R}_{pq}^{'}$, alors le coefficient de corrélation est $\hat{R}_{pq}$ :

$$\hat{R}_{pq} = (a\hat{R}_{pq}^{''} + (1-a)\hat{R}_{pq}^{'})$$

dans lequel, *a* est un coefficient de filtrage.

3. Dispositif d'acquisition d'une réponse de canal, comprenant :

un premier module d'acquisition (301) configuré pour obtenir une estimation du canal de chaque support d'une (n-m)ième trame à une (n-1)ième trame par un signal de référence de sondage (SRS) ;
un second module d'acquisition (302) configuré pour obtenir une matrice de corrélation croisée de chaque support de la (n-m)ième trame à la (n-1)ième trame en effectuant une multiplication conjuguée sur les estimations des canaux, et estimer une matrice de corrélation croisée de chaque support d'une sous-trame p d'une (n)ième trame et de la (n-m)ième trame à la (n-1)ième trame ;
un module de filtrage (303) configuré pour filtrer chaque élément $\hat{R}_{pq}$ de la matrice de corrélation croisée de chaque support ; et
un troisième module d'acquisition (304) configuré pour acquérir une réponse de canal H(n) de chaque support de la sous-trame p de la (n)ième trame par un algorithme de prédiction linéaire en utilisant les matrices de corrélation croisée,
dans lequel, n, m et p sont tous des entiers positifs,
dans lequel le second module d'acquisition (302) étant configuré pour obtenir la matrice de corrélation croisée de chaque support de la (n-m)ième trame à la (n-1)ième trame en effectuant la multiplication conjuguée sur les estimations de canaux, et estimer la matrice de corrélation croisée de chaque support de la sous-trame p de la (n)ième trame et de la (n-m)ième trame à la (n-1)ième trame, comprend :

une expression de la matrice de corrélation croisée d'un support de la (n-m)ième trame à la (n-1)ième trame est la suivante :

$$\mathbf{R}_1 = \begin{bmatrix} \hat{R}_{1,1} & \hat{R}_{2,1} & \dots & \hat{R}_{m-1,1} & \hat{R}_{m,1} \\ \hat{R}_{1,2} & \hat{R}_{2,2} & \dots & \hat{R}_{m-1,2} & \hat{R}_{m,2} \\ \dots & \dots & \dots & \dots & \dots \\ \hat{R}_{1,m-1} & \hat{R}_{2,m-2} & \dots & \hat{R}_{m-1,m-1} & \hat{R}_{m,m-1} \\ \hat{R}_{1,m} & \hat{R}_{2,m-1} & \dots & \hat{R}_{m-1,m} & \hat{R}_{m,m} \end{bmatrix},$$

et

la matrice de corrélation croisée d'un support de la sous-trame p de la (n)ième trame et de la (n-m)ième trame à la (n-1)ième trame est la suivante :

$$\mathbf{R}_2 = \begin{bmatrix} (10-p)\hat{R}_{1,1}/10 + p\hat{R}_{1,2}/10 \\ (10-p)\hat{R}_{1,2}/10 + p\hat{R}_{1,3}/10 \\ \dots \\ (10-p)\hat{R}_{1,m-1}/10 + p\hat{R}_{1,m}/10 \\ (10-p)\hat{R}_{1,m}/10 + p\hat{R}_{1,m+1}/10 \end{bmatrix},$$

dans lequel, $\hat{R}_{pq}$ représente un coefficient de corrélation d'un support d'une (p)ième trame et d'une (q)ième trame, qui est obtenu en effectuant une multiplication conjuguée sur l'estimation du canal d'un support de la (p)ième trame et l'estimation du canal d'un support de la (q)ième trame,

dans lequel la réponse du canal de chaque support de la sous-trame p de la (n)ième trame est

$$H(n) = \sum_{i=1}^{m} a_i H(n-i) ;$$

dans lequel, $a_i$ est obtenu par une équation suivante :

$$\mathbf{R}_2 = \mathbf{R}_1 \begin{bmatrix} a_1 \\ a_2 \\ \dots \\ a_{m-1} \\ a_m \end{bmatrix} ;$$

dans lequel, $i$ est un entier positif.

4. Dispositif selon la revendication 3, dans lequel le module de filtrage (303) étant configuré pour filtrer chaque élément $\hat{R}_{pq}$ de la matrice de corrélation croisée de chaque support, comprend :

un coefficient de corrélation obtenu par une estimation courante est $\hat{R}_{pq}''$, et un coefficient de corrélation obtenu par une estimation rétrospective est $\hat{R}_{pq}'$, alors le coefficient de corrélation est $\hat{R}_{pq}$ :

$$\hat{R}_{pq} = (a\hat{R}_{pq}'' + (1-a)\hat{R}_{pq}')$$

dans lequel, $a$ est un coefficient de filtrage.

5. Médium de stockage informatique sur lequel sont stockées des instructions exécutables par ordinateur, dans lequel les instructions exécutables par ordinateur, lorsqu'elles sont exécutées par un ordinateur, amènent l'ordinateur à exécuter le procédé selon l'une quelconque des revendications 1 à 2.

6. Programme informatique comprenant des instructions qui, lorsqu'elles sont exécutées sur le processeur d'un appareil, amènent le processeur à exécuter un procédé selon l'une des revendications 1 à 2.

Obtain channel estimation of each carrier of a (n-m)$^{th}$ frame to a (n-1)$^{th}$ frame by a SRS  /101

Obtain a cross-correlation matrix of each carrier of the (n-m)$^{th}$ frame to the (n-1)$^{th}$ frame by performing a conjugate multiplication on the channel estimates, and estimate a cross-correlation matrix of each carrier of a subframe $p$ of a n$^{th}$ frame and the (n-m)$^{th}$ frame to the (n-1)$^{th}$ frame  /102

Filter each element $R_{pq}$ of the cross-correlation matrix of each carrier  /103

Acquire a channel response H(n) of each carrier of the subframe $p$ of the n$^{th}$ frame via a linear prediction algorithm by using the cross-correlation matrixes  /104

Fig. 1

Existing method

Method of the present disclosure

Fig. 2

| First acquisition module 301 | Second acquisition module 302 | Filtering module 303 | Third acquisition module 304 |

Fig. 3

**EP 3 376 722 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015154800 A
- US 2015172088 A